# EUROPÄISCHE PATENTSCHRIFT

(11) **EP 0 826 874 B1**
(45) Veröffentlichungstag und Bekanntmachung des Hinweises auf die Patenterteilung: **13.03.2002**
(21) Anmeldenummer: 97113808.6
(22) Anmeldetag: 09.08.1997
(51) Int. Cl.: F02M 31/20

(54) **Einrichtung zur Kühlung des einem Verbrennungsmotor zugeführten Kraftstoffes**
Device for cooling fuel for a combustion engine
Dispositif de refroidissement de carburant pour moteur à combustion

(30) Priorität: 30.08.1996 DE 19635168
(43) Veröffentlichungstag der Anmeldung: 04.03.1998
(73) Patentinhaber: Volkswagen Aktiengesellschaft, 38436 Wolfsburg (DE)
(72) Erfinder: Ohlhoff, Jörg, Dipl.-Ing., 38442 Wolfsburg (DE); Dänekas, Gerfried, Dipl.-Ing., 38114 Braunschweig (DE)

(56) Entgegenhaltungen:
- US-A- 4 308 827
- US-A- 4 491 117
- US-A- 4 924 838
- PATENT ABSTRACTS OF JAPAN vol. 96, no. 9 (M, 30.September 1996 & JP 08 121269 A (HITACHI CONSTR MACH CO), 14.Mai 1996,
- PATENT ABSTRACTS OF JAPAN vol. 97, no. 12 (M, 25.Dezember 1997 & JP 09 203357 A (DENSO CORP), 5.August 1997,

## Beschreibung

Die Erfindung betrifft eine Einrichtung zur Kraftstoffkühlung an einem Verbrennungsmotor gemäß dem Oberbegriff des Patentanspruches 1.

Aus EP 0 523 028 B1 ist ein modular aufgebautes Luftfiltergehäuse eines Verbrennungsmotors bekannt, innerhalb dessen Gehäuse zwischen einem Rohlufteintritt und einem Luftfilterelement ein Abschnitt einer Kraftstoffleitung angeordnet ist, von welcher Einspritzventile versorgt werden, welche ebenfalls Teile dieses Modules sind und in integral ausgebildete Einlaßleitungen ragen.
Da zumindest der vorbeschriebene Abschnitt der Kraftstoffleitung in dem rohluftdurchströmten Teil des Gehäuses liegt, wird diese in diesem Bereich gekühlt.

Desweiteren ist es aus der japanischen Patentoffenlegungsschrift JP-A 57-105549 bekannt, eine zwischen einem Kraftstofftank und einer Brennkraftmaschine eines Kraftfahrzeuges angeordnete Kraftstoffleitung zumindest abschnittsweise innerhalb einer ansaugluftführenden Leitung anzuordnen. Alternativ oder zusätzlich wird vorgeschlagen, die Kraftstoffpumpe selber in dieser Luftleitung anzuordnen.

Weiterhin ist es aus DE-28 41 557 A1 für ein Kraftfahrzeug mit einem in Fahrtrichtung vorne liegend angeordneten Verbrennungsmotor und einem im Heck des Fahrzeuges angeordneten Kraftstofftank bekannt, im Kraftstoffrücklauf Wärmetauscher im Bereich der Heckscheibe anzuordnen, wobei hier mittels separater Gebläse über eine Hutablage der Fahrgastraum entlüftet und der so geförderte Luftstrom den Wärmetauscher beaufschlagt. Anschließend verläßt dieser die Fahrzeugkarosserie über die C-Säule.

Desweiteren ist es aus DT-25 21 409 A1 bekannt, Kraftstoffleitungen in paralleler Anordnung in einem Strangpreßprofil auszubilden. Eine Kühlung des Kraftstoffes ist hier nicht beabsichtigt, vielmehr soll der zur Verfügung stehende Bauraum optimal genutzt werden, eine hohe Stabilität der Kraftstoffleitungen und eine einfache Befestigung erzielt werden.

Die Druckschrift JP 08121269 beschreibt eine Kraftstoffkühleinrichtung für eine Brennkraftmaschine, bei der in einem Kraftstoffrücklauf zu einem Kraftstofftank ein Kühler vorgesehen ist, welcher derart benachbart zu einem Ansaugsystem der Brennkraftmaschine angeordnet ist, daß während des Betriebs der Brennkraftmaschine die Ansaugluft den Kühler kühlt.

Aus der US 4 924 838 ist ein Ladeluftkühler bekannt, welcher an seiner Innenseite zur Erhöhung der Oberfläche entsprechende Vorsprünge aufweist. Der Ladeluftkühler weist eine spiralförmige Ausbildung des Strömungsweges für die zu kühlende Ladeluft auf, um einen Strömungsdistanz und damit die Kühlung zu erhöhen.

Die Druckschrift US 4 308 827 beschreibt ein Kraftstoffeinspritzsystem, bei dem eine Kraftstoffleitung um eine Kraftstoffeinspritzkammer gewunden verläuft.

Bei hochverdichteten und/oder direkt einspritzenden Verbrennungsmotoren tritt häufig das Problem auf, daß sich der dem Zylinderkopf und den darin angeordneten Injektoren zugeführte Kraftstoff stark erwärmt, was sich insbesondere bei dem relativ lange im Zylinderkopf verweilenden, überschüssigen Rücklaufkraftstoff negativ bemerkbar macht. Die beiden erstgenannten Dokumente weisen bescheidene Wärmeaustauschflächen auf und kühlen jeweils im Kraftstoffvorlauf, wo ohnehin vergleichsweise niedrige Temperaturen herrschen. Das nächstgenannte Dokument nutzt zwar vorhandene Gebläse zur Förderung eines Luftstromes aus, ist jedoch in der Leitungsführung für den Kraftstoff kompliziert und aufwendig, nicht crashsicher und fördert zudem insbesondere bei intensiver Sonneneinstrahlung einen bereits stark erwärmten Luftstrom durch den Kühler.

Der Erfindung liegt die Aufgabe zugrunde, eine Einrichtung zur Kühlung des einem Verbrennungsmotor zugeführten Kraftstoffes zu schaffen, welche durch einen erhöhten Wärmeaustausch eine verbesserte Kühlung erreicht.

Die Lösung dieser Aufgabe gelingt bei einer Kraftstoffkühleinrichtung der o.g. Art mit den in Patentanspruches 1 gekennzeichneten Merkmalen. Vorteilhafte Ausgestaltungen der Erfindung sind in den abhängigen Ansprüchen benannt.

Die Erfindung sieht vor, daß innerhalb des Gehäuses im Zuge der Leitung ein vom Kraftstoff durchströmter Wärmetauscherkörper angeordnet ist, dessen äußere Oberfläche zumindest teilweise von der dem Verbrennungsmotor zugeführten Ansaugluft beaufschlagt ist, wobei die äußere Oberfläche zumindest abschnittsweise mit den Wärmeübergang erhöhenden Vorsprüngen versehen ist, wobei ferner die Leitung innerhalb des Wärmetauscherkörpers mehrfach gekrümmt verläuft und der Wärmetauscherkörper aus zumindest zwei plattenartigen Bauteilen besteht, wobei zumindest eines der Bauteile mit den Wärmeübergang erhöhenden Vorsprüngen auf einer Seite versehen und die Leitung als zunächst offene Rinne auf der gegenüberliegenden Seite ausgebildet ist, welche durch das daran befestigte, weitere Bauteil verschlossen ist. Dabei wird die äußere Oberfläche dieses Wärmetauscherkörpers zumindest teilweise von der dem Verbrennungsmotor durch das Gehäuse zugeführten Ansaugluft beaufschlagt.

Vorteilhafterweise ist durch diese Art der Anordnung die Möglichkeit eines stark erhöhten Wärmeüberganges von dem erwärmten Kraftstoff auf die vergleichsweise Kühle, dem Verbrennungsmotor zugeführte Ansaugluft gegeben.

In vielfältiger Ausgestaltung kann durch weitere Maßnahmen dieser Wärmeaustausch verbessert werden, d. h. die erzielbare Temperaturabsenkung vergrößert werden.

Der erfindungsgemäße Wärmetauscherkörper ist modular aufgebaut.

In einer Variante hierzu kann sich die Rinne zu Labyrinthkammern erweitern, welche untereinander durch Verbindungsbohrungen kommunizieren. Hierbei ist die für den Wärmeaustausch zur Verfügung stehende und vom Kraftstoff benetzte Oberfläche vergrößert, wobei gegebenenfalls die Tiefe der Rinne verringert sein kann.

In weiterer vorteilhafter Ausgestaltung dieser zuvor beschriebenen Ausführungsform kann der modular aufgebaute Wärmetauscherkörper aus mehreren Lagen bestehen, wobei jeweils innerhalb der einzelnen, plattenartigen Lagen Teile der Kraftstoffleitung ausgebildet sind.

In einer anderen bevorzugten Ausführungsform kann der Wärmetauscherkörper als Strangpreßprofil ausgebildet sein, welches wiederum eine kostengünstige Großserienherstellung ermöglicht. Dieser kann auf seiner äußeren Oberfläche zusätzlich mit Kühlrippen versehen sein. Innerhalb des Strangpreßprofiles kann die Kraftstoffleitung wiederum mehrfach gekrümmt mäanderförmig verlaufen, wobei die in dem Strangpreßprofil ausgebildeten, den Kraftstoff führenden Profilkammern wiederum ihrerseits mit den Wärmeübergang erhöhenden Rippen versehen sein können.

Als Werkstoffe für den Wärmetauscherkörper kommen insbesondere solche mit hoher Wärmeleitfähigkeit in Betracht, z. B. auf Aluminiumbasis.

Zur Bereitstellung eines im Betrieb des Verbrennungsmotors ständig vorhandenen, kühlen Ansaugluftstromes ist in bevorzugterweise vorgesehen, daß das ansaugluftdurchströmte und den Wärmetauscherkörper aufnehmende Gehäuse als Luftfiltergehäuse des Verbrennungsmotors ausgebildet ist, wobei eine auch bauraumgünstige Anordnung durch eine Lage des Wärmetauscherkörpers stromab des in dem Gehäuse integrierten Luftfilters gefunden wurde.

Weiterhin bevorzugt ist die Anordnung des Wärmetauscherkörpers im Zuge einer den zum Zylinderkopf geförderten und dort für den aktuellen Einspritzvorgang nicht benötigten, überschüssigen Kraftstoff rückführenden Leitung anzuordnen. In dieser sind die auftretenden Kraftstofftemperaturen besonders hoch, so daß ein deutliches Temperaturgefälle gegenüber der vergleichsweise kühlen Ansaugluft vorliegt.

Weitere Vorteile und Merkmale der Erfindung ergeben sich aus dem nachfolgend anhand einer Zeichnung näher erläuterten Ausführungsbeispiel der Erfindung.

Es zeigen:

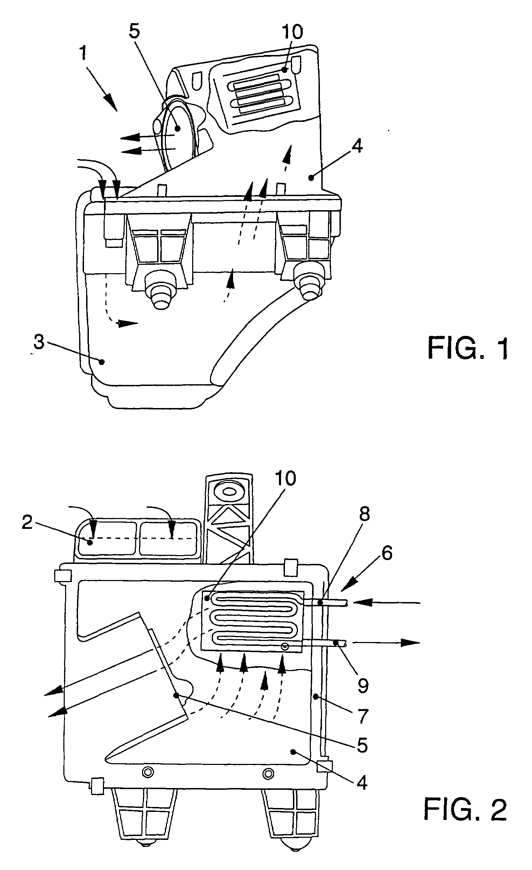

- Figur 1:: eine teilweise gebrochene Seitenansicht eines ansaugluftdurchströmten Gehäuses,
- Figur 2:: eine Draufsicht zu Figur 1,
- Figur 3:: eine Ansicht eines Bauteiles eines modularen Wärmetauscherkörpers,
- Figur 4:: einen Schnitt entlang der Linie IV-IV gemäß Figur 3,
- Figur 5:: einen Schnitt ähnlich Figur 4 durch einen als Strangpreßprofil ausgebildeten Wärmetauscherkörper und
- Figur 6:: eine Ansicht eines Bauteiles eines anderen modularen Wärmetauscherkörpers.

Ein nicht gezeigter, in einem Kraftfahrzeug verbauter Verbrennungsmotor weist im Zuge eines Luftansaugweges für dem Verbrennungsmotor zugeführte Verbrennungsluft ein als Luftfiltergehäuse ausgebildetes Gehäuse 1 auf. Im Betrieb des Verbrennungsmotors wird über einen seitlich des Gehäuses 1 angeordneten Lufteintritt 2 Rohluft angesaugt und über ein in einem Gehäuseunterteil 3 angeordnetes, nicht gezeigtes Luftfilter geleitet. Nach der Filterung strömt die gereinigte Filterluft in ein im wesentlichen dachförmig ausgebildetes Gehäuseoberteil 4, welches mit einer Abströmöffnung 5 versehen ist, welche in nicht gezeigter Weise mit Einlaßkanälen des Verbrennungsmotors verbunden ist.

Dem Verbrennungsmotor ist eine kraftstofführende Leitung 6 zugeordnet, welche abschnittsweise innerhalb des ansaugluftdurchströmten Gehäuses 1 geführt ist. Zu diesem Zwecke ist eine Wandung 7 des Gehäuseoberteiles 4 mit einem Zuströmstutzen 8 und einem Abströmstutzen 9 versehen, welche Teil der Leitung 6 sind.

Für den Betrieb des Verbrennungsmotors notwendiger Kraftstoff wird in an sich bekannter Weise mit einer Förderpumpe aus einem Kraftstofftank zu im Zylinderkopf des Verbrennungsmotors angeordneten Injektoren gefördert. Überschüssiger, beim jeweils aktuellen Einspritzvorgang nicht benötigter Kraftstoff erwärmt sich hierbei in bereits zuvor beschriebener Weise. Dieser erwärmte Kraftstoff wird über einen Rücklauf erneut dem Kraftstofftank zugeführt. Die Leitung 6 ist Teil dieses Rücklaufes, so daß erwärmter, rückströmender Kraftstoff über den Zuströmstutzen 8 in das Innere des Gehäuses 1 gelangt, und dort einem noch näher zu beschreibenden Wärmetauscherkörper 10 zugeführt wird. Nach dessen Durchströmen gelangt der abgekühlte Kraftstoff über den Abströmstutzen 9 zurück in den Kraftstofftank.

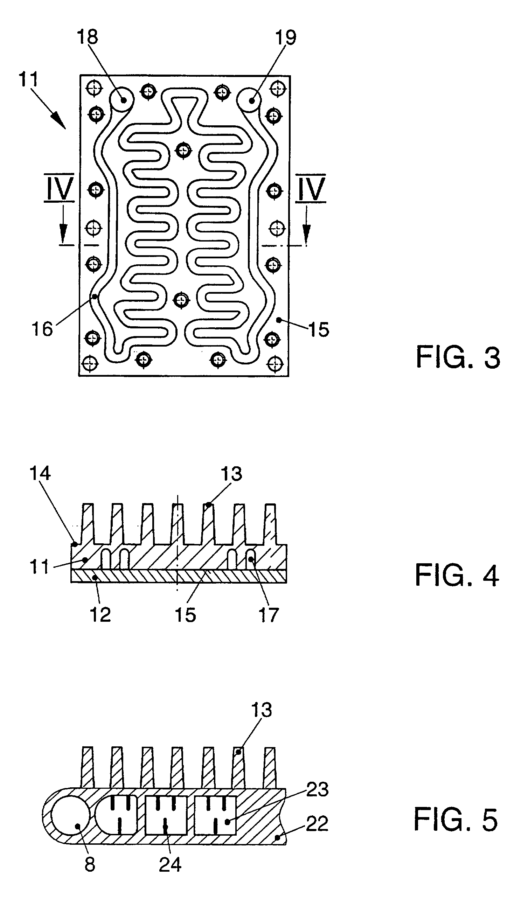

In einer Ausführung gemäß Figuren 3 und 4 ist dieser Wärmetauscherkörper 10 aus zwei plattenartigen Bauteilen 11 und 12 gebildet, wobei das eine Bauteil 11 mit den wärmeübergangerhöhenden, als Rippen ausgebildeten Vorsprüngen 13 auf einer seiner Seiten 14 versehen ist. Die parallel dazu verlaufende, andere Seite 15 dieses Bauteiles 11 weist eine zunächst offene Rinne 16 auf, welche durch anschließende Montage des zweiten Bauteiles 12 zu einem geschlossenen Kanal 17 als Teil der Leitung 6 wird. Wie am Besten aus Figur 3 ersichtlich, gelangt der erwärmte, rücklaufende Kraftstoff über den Zuströmstutzen 8 zu einer Einspeisstelle 18 und tritt von dort aus in den Kanal 17 ein, welcher mehrfach gekrümmt verläuft und dabei in einem inneren Bereich mäanderförmig ausgebildet ist. Eine Abströmstelle 19 kann mit dem Abströmstutzen 9 verbunden sein oder bei erhöhten Anforderungen an die zu erzielende Temperaturabsenkung mit weiteren, sandwichartig aufgebauten und plattenartigen Bauteilen zusammenwirken.

Auch kann in Abweichung der gezeigten Ausführung gemäß Figur 4 der Wärmetauscherkörper 10 aus zwei identischen Bauteilen 11 bestehen.

Die Anordnung des Wärmetauscherkörpers 10 innerhalb des Luftfiltergehäuses gewährleistet im Zusammenhang mit der durch die Vorsprünge 13 bereitgestellten, großen äußeren Oberfläche im Betrieb des Verbrennungsmotors durch den vergleichsweise hohen, ständig geförderten Ansaugluftstrom eine starke Herabsetzung der Kraftstofftemperatur.

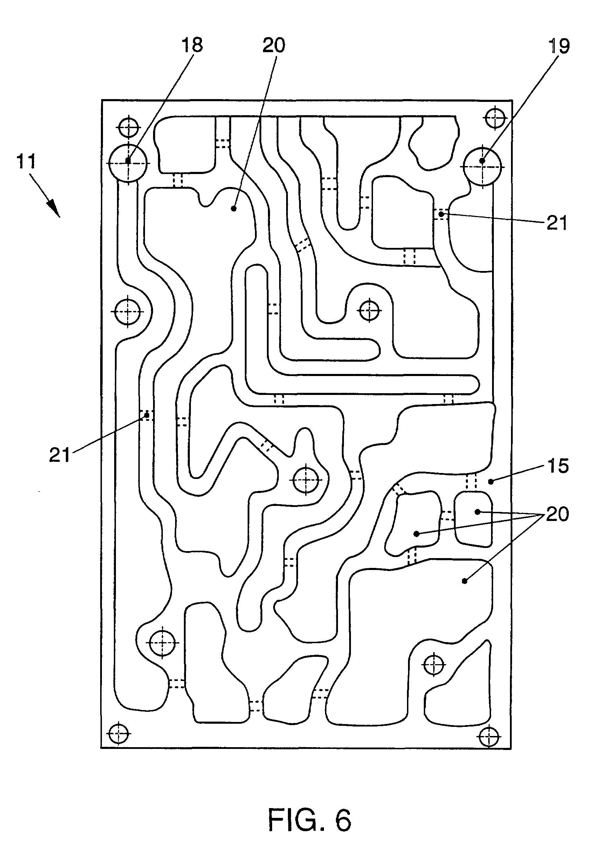

In Abweichung von der Ausführungsform gemäß Figur 3 kann bei einem anderen modularen Wärmetauscherkörper 10 gemäß Figur 6 an Stelle einer ununterbrochenen Rinne 16 eine Mehrzahl von Labyrinthkammern 20 angeordnet sein, welche untereinander durch Querkanäle 21 kommunizieren. Hierbei können den einzelnen Labyrinthkammern 20 mehrere Querkanäle 21 zugeordnet sein. Der Eintritt des Kraftstoffes erfolgt wiederum über die Einspeisstelle 18, von welcher aus der Kraftstoff über dann mehrere Strömungswege bis zur Abströmstelle 19 gelangt.

In einer kostengünstigen Alternative kann gemäß Figur 5 der Wärmtauscherkörper 10 als Strangpreßprofil 22 ausgebildet sein, innerhalb dessen als Teil der Leitung 6 kraftstofführende, untereinander verbundene Profilkammern 23 ausgebildet sind, welche in ihrer Funktion dem vorbeschriebenen Kanal 17 entsprechen.

Zur weiteren Erhöhung des Wärmeüberganges kann die äußere Oberfläche des Strangpreßprofiles 22 ebenfalls mit rippenartigen Vorsprüngen 13 versehen sein und die Wandungen der Profilkammern 23 können ebenfalls mit Rippen 24 versehen sein.

In Abweichung von den vorbeschriebenen Ausführungsbeispielen kann der Wärmetauscherkörper auch in einem beliebigen anderen, ansaugluftdurchströmten Gehäuse, z. B. einem Ansaugschlauch, einer Lufthutze oder einem Nebenschlußresonator angeordnet sein, jedoch bietet die gezeigte Anordnung innerhalb eines ohnehin vorhandenen und benötigten Volumens des Luftfiltergehäuses bezüglich des benötigten Bauraums erhebliche Vorteile.

## Patentansprüche

1. Einrichtung zum Kühlen des einem Verbrennungsmotor zugeführten Kraftstoffes, mit einer kraftstofführenden Leitung (6), welche zumindest abschnittsweise innerhalb eines ansaugluftdurchströmten Gehäuses (1) geführt ist, **dadurch gekennzeichnet, daß** innerhalb des Gehäuses (1) im Zuge der Leitung (6) ein vom Kraftstoff durchströmter Wärmetauscherkörper (10) angeordnet ist, dessen äußere Oberfläche zumindest teilweise von der dem Verbrennungsmotor zugeführten Ansaugluft beaufschlagt ist, wobei die äußere Oberfläche zumindest abschnittsweise mit den Wärmeübergang erhöhenden Vorsprüngen (13) versehen ist, wobei ferner die Leitung (6) innerhalb des Wärmetauscherkörpers (10) mehrfach gekrümmt verläuft und der Wärmetauscherkörper (10) aus zumindest zwei plattenartigen Bauteilen (11,12) besteht, wobei zumindest eines der Bauteile (11) mit den Wärmeübergang erhöhenden Vorsprüngen (13) auf einer Seite (14) versehen und die Leitung (6) als zunächst offene Rinne (16) auf der gegenüberliegenden Seite (15) ausgebildet ist, welche durch das daran befestigte, weitere Bauteil (12) verschlossen ist.

2. Einrichtung nach Anspruch 1, **dadurch gekennzeichnet, daß** der Wärmetauscherkörper (10) aus zumindest zwei plattenartigen Bauteilen (11, 12) besteht, wobei zumindest eines der Bauteile (11) auf einer seiner Seiten (15) mit gegenüber dieser Seite (15) offenen Labyrinthkammern (20) vesehen ist, welche untereinander mittels Querkanälen (21) kommunizieren.

3. Einrichtung nach Anspruch 1, **dadurch gekennzeichnet, daß** der Wärmetauscherkörper (10) als Strangpreßprofil (22) ausgebildet ist, innerhalb dessen kraftstofführende Profilkammern (23) als Teil der Leitung (6) ausgebildet sind.

4. Einrichtung nach Anspruch 3, **dadurch gekennzeichnet, daß** die Profilkammern (23) an ihren Wandungen mit den Wärmeübergang erhöhenden Rippen (24) versehen sind.

5. Einrichtung nach einem oder mehreren der vorhergehenden Ansprüche, **dadurch gekennzeichnet, daß** das Gehäuse (1) als Luftfiltergehäuse des Verbrennungsmotors ausgebildet ist.

6. Einrichtung nach Anspruch 4, **dadurch gekennzeichnet, daß** der Wärmetauscherkörper (10) stromab eines in dem Gehäuse (1) integrierten Luftfilters angeordnet ist.

7. Einrichtung nach einem oder mehreren der vorhergehenden Ansprüche, **dadurch gekennzeichnet, daß** der Wärmetauscherkörper (10) im Zuge einer überschüssigen Kraftstoff von dem Verbrennungsmotor rückführenden Leitung (6) angeordnet ist.

## Claims

1. Device for cooling the fuel supply to an internal combustion engine, having a fuel-conducting pipe (6) which is guided, at least in some sections, within a housing (1) through which intake air flows, **characterized in that** a heat-exchanger body (10) through which the fuel flows is arranged over the course of the pipe (6) within the housing (1), and at least part of the outer surface of the said heat-exchanger body is acted upon by the intake air supplied to the internal combustion engine, the outer surface being provided, at least in some sections, with projections (13) which increase the transfer of heat, furthermore, the pipe (6) being curved a number of times within the heat-exchanger body (10) and the heat-exchanger body (10) comprising at least two plate-like components (11, 12), at least one of the components (11) being provided on one side (14) with projections (13) which increase the transfer of heat, and the pipe (6) being designed on the opposite side (15) as an initially open conduit (16) which is closed by the further component (12) fastened to it.

2. Device according to Claim 1, **characterized in that** the heat-exchanger body (10) comprises at least two plate-like components (11, 12), at least one of the components (11) being provided on one of its sides (15) with labyrinth chambers (20) which are open with respect to this side (15) and communicate with one another by means of cross channels (21).

3. Device according to Claim 1, **characterized in that** the heat-exchanger body (10) is designed as an extruded profile (22) within which fuel-conducting profile chambers (23) are formed as part of the pipe (6).

4. Device according to Claim 3, **characterized in that** the walls of the profile chambers (23) are provided with ribs (24) which increase the transfer of heat.

5. Device according to one or more of the preceding claims, **characterized in that** the housing (1) is designed as an air-filter housing of the internal combustion engine.

6. Device according to Claim 4, **characterized in that** the heat-exchanger body (10) is arranged downstream of an air filter integrated in the housing (1).

7. Device according to one or more of the preceding claims, **characterized in that** the heat-exchanger body (10) is arranged over the course of the pipe (6), which recycles excess fuel from the internal combustion engine.

## Revendications

1. Dispositif de refroidissement du carburant fourni à un moteur à combustion interne, avec une conduite de carburant (6), qui est menée au moins en partie à l'intérieur d'un carter (1) parcouru par l'air d'admission, **caractérisé en ce qu'**à l'intérieur du carter (1), à la suite de la conduite (6) est disposé un corps d'échangeur de chaleur (10) parcouru par le carburant, dont la surface extérieure est au moins en partie exposée à l'air d'admission fourni au moteur à combustion interne, dans lequel la surface extérieure est au moins en partie pourvue de saillies (13) augmentant le transfert de chaleur, dans lequel en outre la conduite (6) est recourbée plusieurs fois à l'intérieur du corps d'échangeur de chaleur (10) et le corps d'échangeur de chaleur (10) se compose d'au moins deux pièces en forme de plaques (11, 12), dans lequel au moins une des pièces (11) est pourvue sur une face (14) des saillies (13) augmentant le transfert de chaleur et la conduite (6) a d'abord la forme d'une rigole ouverte (16) sur la face opposée (15), qui est obturée par l'autre pièce (12) fixée sur celle-ci.

2. Dispositif suivant la revendication 1, **caractérisé en ce que** le corps d'échangeur de chaleur (10) se compose d'au moins deux pièces en forme de plaques (11, 12), dans lequel au moins une des pièces (11) est pourvue sur une de ses faces (15) de chambres en labyrinthe (20) ouvertes par rapport à cette face (15), qui communiquent les unes avec les autres par des canaux transversaux (21).

3. Dispositif suivant la revendication 1, **caractérisé en ce que** le corps d'échangeur de chaleur (10) a la forme d'un profil extrudé (22), à l'intérieur duquel sont façonnées des chambres profilées (23) transportant le carburant, qui font partie de la conduite (6).

4. Dispositif suivant la revendication 3, **caractérisé en ce que** les chambres profilées (23) sont pourvues sur leurs parois de nervures (24) augmentant le transfert de chaleur.

5. Dispositif suivant l'une quelconque des revendications précédentes, **caractérisé en ce que** le carter (1) est constitué par un carter de filtre à air du moteur à combustion interne.

6. Dispositif suivant la revendication 4, **caractérisé en ce que** le corps d'échangeur de chaleur (10) est disposé en aval d'un filtre à air intégré dans le carter (1).

7. Dispositif suivant l'une quelconque des revendications précédentes, **caractérisé en ce que** le corps d'échangeur de chaleur (10) est disposé à la suite d'une conduite (6) renvoyant le carburant en excès venant du moteur à combustion interne.
